# EUROPÄISCHE PATENTANMELDUNG

(11) **EP 1 462 294 A1**
(43) Veröffentlichungstag der Anmeldung: **29.09.2004**
(21) Anmeldenummer: 04006059.2
(22) Anmeldetag: 15.03.2004
(51) Int. Cl.: B60K 35/00, G07C 5/08, G01C 21/36, G08G 1/0962

(54) **Verfahren zur Abbildung unterschiedlicher Bilddaten auf einem Fahrzeugdisplay**

(30) Priorität: 24.03.2003 DE 10313001
(71) Anmelder: DaimlerChrysler AG, 70567 Stuttgart (DE)
(72) Erfinder: Eggers, Helmuth, Dr.-Ing., 89077 Ulm (DE); Kurz, Gerhard, Dipl.-Ing., 73240 Wendlingen (DE); Seekircher, Jürgen, Dipl.-Ing., 73760 Ostfildern (DE); Wohlgemuth, Thomas, Dipl.-Ing., 72631 Aichtal (DE)

(57) **Zusammenfassung**

Moderne Fahrzeuge sind mit bildgebenden Assistenzsystemen ausgestattet. Jedes dieser Systeme umfasst zur Abbildung von Systeminformationen üblicherweise ein eigenes Display. Es wird daher ein Verfahren zur Abbildung von Systeminformationen auf einem einzigen Fahrzeugdisplay bereitgestellt, wobei insbesondere Bilddaten unterschiedlicher Systeme abgebildet werden. Die den Systeminformationen zugeordneten Bilddaten werden hierbei anhand von Betriebsparametern zunächst einer Priorisierung unterzogen und in Abhängigkeit vom Ergebnis dieser Priorisierung anschließend auf dem Fahrzeugdisplay abgebildet. Wobei aufgrund der Priorisierung insbesondere die Abbildungsparameter der Bilddaten in Größe, Position und Form variiert werden. Dabei ist es Möglich, dass mehrere den priorisierten Systeminformationen zugeordnete Bilddaten gleichzeitig abgebildet werden.

## Beschreibung

Die Erfindung betrifft ein Verfahren zur Abbildung unterschiedlicher Bilddaten auf einem Fahrzeugdisplay.

Moderne Fahrzeuge sind mit unterschiedlichen Assistenzsystemen ausgestattet, welche den Fahrer unterstützen sollen. Dabei werden vermehrt bildgebende Assistenzsysteme eingesetzt. Im Automobilen Bereich gibt es beispielsweise Nachtsichtsysteme bei denen mittels einem Infrarotsensor die vorausliegende Fahrzeugumgebung erfasst wird. Die erfassten Umgebungsdaten werden sodann mittels einer Datenverarbeitungseinheit zu einem Bild verarbeitet und auf einem Display abgebildet, wo sie vom Fahrer bei Bedarf abgerufen werden können. Ein weiteres Beispiel sind Navigationssysteme, wobei dem Fahrer häufig das Bild einer Landkarte auf einem Display abgebildet wird. Zusätzlich zu diesen bildgebenden Systemen verfügen Fahrzeuge häufig über weitere Systeme und Einrichtungen, welche ein Display umfassen und damit Auskunft über den Betriebszustand des Fahrzeugs geben. Die Ansteuerung solcher Displays erfolgt dabei meist automatisch mittels einer Steuereinheit. Somit kann sich der Fahrer hauptsächlich auf den Straßenverkehr konzentrieren , wobei ihm immer jeweils eine an die aktuelle Situation angepasste Information auf dem Display des Assistenzsystems zum Abruf zur Verfügung steht.

Die japanischen Patentanmeldungen mit den Veröffentlichungsnummern JP 2002048565 und JP 2002002425 beschreiben eine Steuereinheit für ein Display in einem Fahrzeug. Wobei die Steuereinheit ein Steuermittel umfasst, womit auf dem Display eine 3D-Karte zu Navigationszwecken abgebildet werden kann. Der 3D-Karte kann in einem Überlagerungsmodus zudem ein mittels einer Infrarot Kamera aufgenommenes Infrarotbild überlagert werden, welches vorausliegende Hindernisse anzeigt. Die Steuereinheit übernimmt im Überlagerungsmodus die Anordnung des Infrarotbildes auf dem Display. Beispielsweise erfolgt die Anordnung auf dem Display dann, falls der Teilbildbereich, den das Infrarotbild umfasst, 50% oder mehr der gesamten Fläche der 3D-Karte einnimmt. Falls extrem schlechte Sichtverhältnisse vorherrschen, und keine direkte visuelle Überprüfung durch den Fahrer durchgeführt werden kann, wird nur die 3D-Karte sowie ein Richtungssymbol für die Reiseroute abgebildet.

Die japanische Patentanmeldung mit der Veröffentlichungsnummer JP 2001071790 beschreibt ein Display für ein Kraftfahrzeug. Das Display kann wahlweise im Automatikmodus oder auch manuell betrieben werden. Im Automatikmodus wird bei gleichzeitig aktivierter Zoom-Funktionalität ein vergrößerter Bildausschnitt eines Hindernisses, welches sich im Umfeld des Fahrzeugs befindet, auf dem Display abgebildet. Dabei kann die komplette Vollbildszene verkleinert innerhalb dem vergrößerten Bildausschnitt, welcher das Hindernis zeigt, abgebildet werden. Der Bildausschnitt der das Hindernis umfasst wird dabei insbesondere dann vergrößert abgebildet, falls der Abstand zwischen dem eigenen Kraftfahrzeug und einem detektierten Hindernis größer als ein dementsprechend eingestellter Schwellwert ist. Der das Distanzkriterium beschreibende Schwellwert dient hierbei zur Priorisierung der Systeminformation, wobei hierbei der Schwellwert der Geschwindigkeit des Kraftfahrzeugs angepasst wird. Damit wird ein Display für Fahrzeuge bereitgestellt, welches es ermöglicht ein vom eigenen Fahrzeug entferntes Hindernis zu erkennen und darzustellen. Mit dem Display wird insbesondere dasjenige Hindernis abgebildet, welches dem eigenen Fahrzeug am nächsten ist und wobei gleichzeitig die Schwellwertbedingung erfüllt ist, also die höchste Priorität aufweist. Der Nachteil bei der Priorisierung bezüglich der abzubildenden Bilddaten ist es hierbei, dass nur die vom Kamerasystem gelieferte Systeminformation betrachtet wird.

Der Erfindung liegt daher die Aufgabe zu Grunde, ein Verfahren bereitzustellen, welches bei der Priorisierung bezüglich abzubildender Bilddaten Informationen unterschiedlicher Systeme betrachtet und eine geeignete Abbildung priorisierter Bilddaten ermöglicht.

Die Aufgabe wird gemäß der Erfindung durch ein Verfahren mit den Merkmalen des Patentanspruchs 1 gelöst. Vorteilhafte Ausgestaltungen und Weiterbildungen werden in den Unteransprüchen aufgezeigt.

Gemäß der Erfindung wird ein Verfahren zur Abbildung unterschiedlicher Bilddaten auf einem Fahrzeugdisplay bereitgestellt. Hierbei werden anhand von Betriebsparametern Systeminformationen einer Priorisierung unterzogen. Wobei mittels dem Ergebnis der Priorisierung die Abbildung der auf dem Fahrzeugdisplay abzubildenden Bilddaten beeinflusst wird. In einer erfinderischen Weise werden dabei Systeminformationen mehrerer Systeme priorisiert und mehrere den priorisierten Systeminformationen zugeordnete Bilddaten gleichzeitig abgebildet. Wobei die Abbildungsparameter der Bilddaten aufgrund ihrer Priorisierung in Größe und/oder Position und/oder Form variiert werden. Mit der Erfindung wird es erst möglich, Bilddaten mehrerer Systeme gleichzeitig auf einem einzigen Display abzubilden, wobei die Art und Weise der Abbildung der Bilddaten automatisch aufgrund der Priorisierung der Systeminformationen erfolgt. Insbesondere wird die Priorisierung der Systeminformationen hierbei anhand von Betriebsparametern und/oder Vorgaben durch den Fahrer vorgenommen.

In besonders vorteilhafter Weise erfolgt die Abbildung unterschiedlicher Bilddaten auf dem Fahrzeugdisplay in der Art einer Statusanzeige. Hierzu wird das Fahrzeugdisplay derart unterteilt, so dass unterschiedliche Teilbildbereiche entstehen. Wobei ein Teilbildbereich in der Art einer Statusanzeige angeordnet ist. Diese Statusanzeige ist wahlweise oder in Abhängigkeit der Anzahl abzubildender Bilddaten in weitere Teilbildbereiche unterteilt. In den Teilbildbereichen der Statusanzeige können sodann Bilddaten eines Systems oder unterschiedlicher Systeme abgebildet werden. Dabei kann es sich um Systeminformationen mit derselben oder unterschiedlicher Priorität handeln. Die Statusanzeige wird hierbei in vorteilhafter Weise in einem Randbereich des Fahrzeugdisplays dargestellt, beispielsweise am oberen oder unteren Rand in der Form einer Statuszeile. Selbstverständlich ist es dabei auch denkbar, dass die Bilddaten innerhalb vertikal angeordneter Teilbildbereiche in der Art einer Statusspalte abgebildet werden oder in jeder beliebigen weiteren Orientierung.

In Bezug auf wenigstens eine Systeminformation entspricht der die Größe beschreibende Abbildungsparameter der zugeordneten Bilddaten der Größe eines Vollbildes. Wobei die Größe eines Vollbildes mit dem größten Teil der abbildbaren Größe des Displays übereinstimmt. In vorteilhafter Weise umfassen hierbei die höchstpriorisierenden zugeordneten Bilddaten einen die Größe eines Vollbildes beschreibenden Abbildungsparameter. Somit füllen die höchstpriorisierenden Bilddaten das Fahrzeugdisplay nahezu vollständig aus, wohingegen die Bilddaten anderer Systeme eine vergleichsweise kleine Fläche des Fahrzeugdisplays beanspruchen, beispielsweise innerhalb einer Statusanzeige. Jedoch ist es auch denkbar, dass das die ein Vollbild umfassenden Bilddaten die gesamte Fläche des Fahrzeugdisplay beanspruchen und die Statusanzeige hierbei der Abbildung des Vollbildes überlagert oder unterdrückt wird.

Indem wenigstens ein Abbildungsparameter der den Systeminformationen zugeordneten Bilddaten die Größe eines Teilbildes umfasst, wird es möglich dass Bilddaten mehrerer Systeme auch außerhalb einer Statusanzeige gleichzeitig in unterschiedlichen Teilbildern abbildbar sind. Beispielsweise können auf diese Weise zwei unterschiedlicher Systeminformationen zugeordnete Bilddaten gleicher Priorisierung zur gleichen Zeit abgebildet werden, wobei die beiden die Bilddaten enthaltenden Teilbilder vorzugsweise jeweils die Hälfte der Fläche des Fahrzeugdisplays beanspruchen. Selbstverständlich ist hierbei auch eine Unterteilung in weitere Teilbilder denkbar, welche dieselbe oder aber auch unterschiedliche Größen aufweisen können. Die Anzahl und Größe der Teilbilder wird hierbei hauptsächlich aufgrund der Priorisierung der Systeminformationen vorgenommen. Jedoch kann durch den Fahrer und/oder weitere Steuersignale grundsätzlich eine fest vorgegebene Obergrenze für die maximal abbildbare Anzahl von Bilddaten festgelegt werden, um den Fahrer nicht mit Informationen zu überfluten.

Zur automatischen Abbildung von Bilddaten mehrerer Systeme auf einem Fahrzeugdisplay ist ein Abbildungsparameter vorgesehen, welcher die Position von Bilddaten auf dem Fahrzeugdisplay definiert. In vorteilhafter Weise weist dabei wenigstens ein Abbildungsparameter der den Systeminformationen zugeordneten Bilddaten eine Position innerhalb eines Teilbildes auf. Somit können die jeweiligen Bilddaten automatisch an einer mittels der Priorisierung ermittelten Position innerhalb einem Teilbild auf dem Fahrzeugdisplay zugeordnet werden. Weiterhin erweist es sich als vorteilhaft, wenn wenigstens ein Abbildungsparameter der den Systeminformationen zugeordneten Bilddaten eine Position innerhalb einer Statusanzeige aufweist. Dementsprechend können Bilddaten automatisch an einer mittels der Priorisierung ermittelten Position innerhalb einem Teilbild einer Statusanzeige zugeordnet werden. Hierbei ist es auch denkbar, dass eine Systeminformation eines bestimmten Systems einer Fixposition auf dem Display zugeordnet ist.

Da mit dem Verfahren Bilddaten unterschiedlicher Systeme abgebildet werden ist es besonders vorteilhaft, wenn wenigsten ein Abbildungsparameter der den Systeminformationen zugeordneten Bilddaten eine symbolische Form aufweist. Beispielsweise lassen sich Informationen eines Navigationssystems besonders gut in der Form von Navigationssymbolen als Bildinformation abbilden. Somit können auch Symbole Fahrzeuginterner Systeme, welche bereits bei konventionellen Anzeigen in Kraftfahrzeugen verwendet werden, problemlos mit dem Erfindungsgemäßen Verfahren abgebildet werden. Gleichsam ist es vorteilhaft, wenn wenigstens ein Abbildungsparameter der den Systeminformationen zugeordneten Bilddaten eine Textform aufweist. Wobei es sich bei der Textform sowohl um Ziffern als auch um Buchstaben handeln kann. Beispielsweise werden Ziffern vorzugsweise zur Abbildung von Entfernungs-, Zeit- oder Geschwindigkeitswerten eingesetzt. Wohingegen Buchstaben beispielsweise zur Abbildung von Service-Informationen verwendet werden können. Auch ist es hierbei denkbar jedem System ein eindeutiges Kürzel zuzuweisen, wobei dieses Kürzel in der Statusanzeige beispielsweise dazu abgebildet wird, um damit anzuzeigen ob ein System derzeit aktiv oder inaktiv ist.

Auch ist es denkbar, dass alle unterschiedlichen Bildinformationen gleichzeitig abgebildet werden. Hierbei werden die die Position, Größe sowie Form beschreibenden Bildparameter der Bilddaten aufgrund der Priorisierung der Systeminformationen automatisch angepasst. Beispielsweise werden die unterschiedlichen Bilddaten entweder als Voll-/Teilbild oder innerhalb einer Statusanzeige abgebildet. Wobei ein abzubildender Bildausschnitt automatisch an die noch zu Verfügung stehende Displayfläche angepasst wird. Die noch zur Verfügung stehende Displayfläche ist beispielsweise über den CAN-Bus des Fahrzeugs abrufbar. Jedoch ist es auch denkbar, dass der Fahrer direkt Einfluss auf die Priorisierung und/oder Abbildungsparameter nehmen kann. Darüber hinaus besteht die Möglichkeit, dass die Bilddaten nicht an die noch zur Verfügung stehende Displayfläche angepasst wird, sondern Bilddaten gegenseitig überlagert werden. Wobei beispielsweise nur die Position der Bildinformation automatisch angepasst wird.

Weitere Merkmale und Vorteile der Erfindung ergeben sich aus der folgenden Beschreibung von Ausführungsbeispielen aus dem Automobilen Bereich anhand der Figuren. Dabei zeigen:
- Fig. 1: Kraftfahrzeug-Display in Vollbild-Darstellung mit Statusanzeige.
- Fig. 2: Kraftfahrzeug-Display in Teilbild-Darstellung mit Statusanzeige.
- Fig. 3: Kraftfahrzeug-Display in Teilbild-Darstellung mit angepasster Statusanzeige.

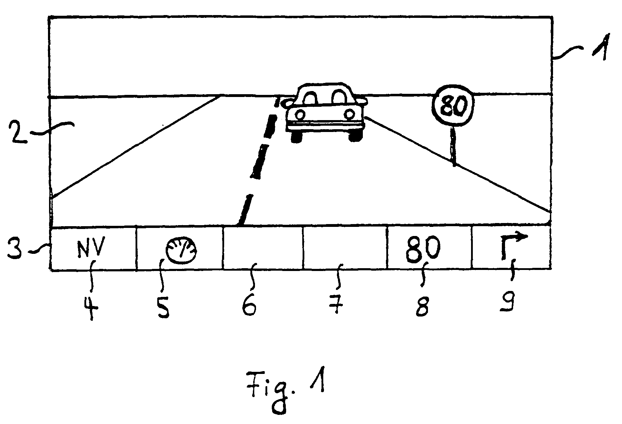

Fig. 1 zeigt ein Kraftfahrzeug-Display (1) , welches in einen Vollbildbereich (2) und in eine Statusanzeige (3) aufgeteilt ist. Innerhalb des Vollbildbereichs (2) wird eine Videoszene abgebildet, welche die dem Kraftfahrzeug vorausliegende Umgebung zeigt. Hierbei handelt es sich insbesondere um die Umgebungserfassung mit einem Nachtsichtsystem "NV". Die Statusanzeige (3) ist in der Form einer Statuszeile am unteren Rand des Kraftfahrzeug-Displays (1) angeordnet und umfasst hierbei die Teilbildbereiche (4) bis (9) . Diese Teilbildbereiche umfassen Bilddaten mehrerer Systeme. Die Abbildung in Textform mit den Zeichen "NV" im Teilbildbereich (4) der Statusanzeige (3) kennzeichnet beispielsweise den aktivierten Zustand des Nachsichtsystems. Im Teilbildbereich (5) ist eine Kontrollanzeige in Symbolform abgebildet, welche die Betriebstemperatur des Kraftfahrzeugs anzeigt. Bei den Teilbildbereichen (6) und (7) handelt es sich um Teilbildbereiche weiterer Systeme, welche derzeit inaktiv sind. Teilbildbereich (8) gibt die im Rahmen einer Verkehrszeichenerkennung detektierte maximal zulässige Geschwindigkeit in Ziffernform an. Das Symbol in Teilbereich (9) zeigt dem Fahrer den von einem Navigationssystem vorgegebenen Fahrtrichtungswechsel an. Die innerhalb der Statusanzeige (3) abgebildeten Bilddaten sind dabei derart angeordnet, dass deren Priorität in der Reihenfolge von rechts nach links zunimmt. Alternativ wäre es auch denkbar, dass die Teilbildbereiche (6) und (7) an der Stelle der Teilbildbereiche (8) und (9) positioniert werden und umgekehrt. Hierdurch würde keine Lücke bei der Abbildung der Bilddaten entstehen. Systeminformationen die dann nachträglich abgebildet werden sollen, können in der Form von Bilddaten entsprechend Ihrer Priorität an der jeweiligen Position automatisch eingefügt werden.

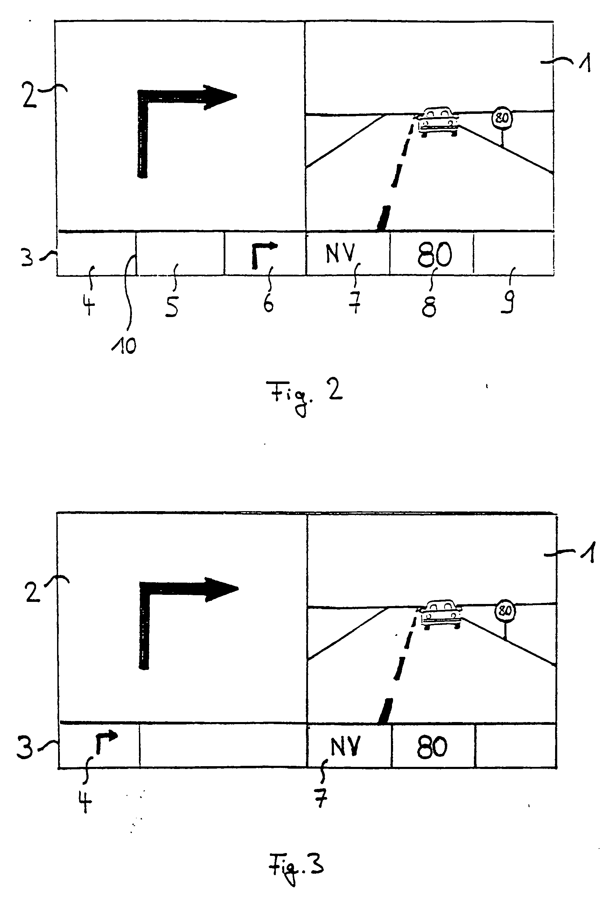

In der Fig. 2 werden auf dem Kraftfahrzeug-Display die beiden Teilbildbereiche (1) und (2), sowie die Statusanzeige (3) abgebildet. Die beiden Teilbildbereiche (1) und (2) besitzen aufgrund von Betriebsparametern hierbei zwar unterschiedliche Prioritäten, werden aber dennoch mit derselben Größe abgebildet. Die Positionen der Bildinformationen in den Teilbildbereichen (4) bis (9) innerhalb der Statusanzeige (3) wurde nun gegenüber Fig. 1 geändert. Dabei sind die Teilbildbereiche (4) bis (9) in horizontaler Richtung dem jeweiligen Teilbildbereich (1) oder (2) eines Systems zugeordnet. Hierbei kann die höchstpriorisierende Bildinformation dem rechten Rand eines Teilbildes zugeordnet sein, wie dies am Beispiel des Teilbildes (2) und dem Navigationssymbol in Teilbild (6) gezeigt wird. Gleichsam ist es denkbar, dass die höchstpriorisierende Bildinformation dem linken Rand eines Teilbildes zugeordnet ist, wie dies am Beispiel des Teilbildes (1) und dem Text "NV" im Teilbildbereich (7) gezeigt wird. Denkbar wäre es hierbei auch, dass das höchstpriorisierende Teilbild (6) bzw. (7) in horizontaler Richtung direkt in der Mitte unterhalb des zugehörigen Teilbildes (1) bzw. (2) erfolgt. Dasselbe gilt entsprechend für die vertikale Richtung, falls die Statusanzeige (3) in der form einer Statusspalte vertikal angeordnet wird. Da an den Positionen der Teilbildbereiche (4) und (5) innerhalb der Statusanzeige (3) keine Bildinformationen abgebildet werden, wäre es auch denkbar, dass die Unterteilung durch die Trennlinie (10) nicht abgebildet wird.

Fig. 3 zeigt auf dem Kraftfahrzeug-Display dieselben Teilbildbereiche (1) und (2) wie in Fig. 2. Gegenüber Fig. 2 sind jedoch die Teilbildbereiche in der Statusanzeige (3) angepasst. Insbesondere wird das Navigationssymbol (4) am linken Rand des Fahrzeugdisplays abgebildet. Somit werden die höchstpriorisierenden Teilbildbereiche (4) und (7) der Statusanzeige (3) am linken Rand relativ zu den zugehörigen Teilbildern (1) und (2) positioniert. Selbstverständlich besteht die Möglichkeit, dass durch den Fahrer individuell Vorgaben zur Größe, Position und Form abzubildender Bildbereiche gemacht werden.

## Patentansprüche

1. Verfahren zur Abbildung unterschiedlicher Bilddaten auf einem Fahrzeugdisplay,
bei dem anhand von Betriebsparametern Systeminformationen einer Priorisierung unterzogen werden,
und wobei das Ergebnis der Priorisierung die Abbildung der auf dem Fahrzeugdisplay abzubildenden Bilddaten beeinflusst,
**dadurch gekennzeichnet,**
**dass** Systeminformationen mehrerer Systeme priorisiert werden,
und mehrere den priorisierten Systeminformationen zugeordneten Bilddaten gleichzeitig abgebildet werden,
wobei die Abbildungsparameter der Bilddaten aufgrund ihrer Priorisierung in Größe und/oder Position und/oder Form variiert werden.

2. Verfahren nach Anspruch 1,
**dadurch gekennzeichnet,**
**dass** die Abbildung unterschiedlicher Bilddaten auf dem Fahrzeugdisplay in der Art einer Statusanzeige erfolgt.

3. Verfahren nach einem der vorstehenden Ansprüche,
**dadurch gekennzeichnet,**
**dass** in Bezug auf wenigstens eine Systeminformation der die Größe beschreibende Abbildungsparameter der dieser zugeordneten Bilddaten der Größe eines Vollbildes entspricht, wobei die Größe eines Vollbildes mit dem größten Teil der abbildbaren Größe des Displays übereinstimmt.

4. Verfahren nach einem der vorstehenden Ansprüche,
**dadurch gekennzeichnet,**
**dass** wenigstens ein Abbildungsparameter der den Systeminformationen zugeordneten Bilddaten eine Position innerhalb eines Teilbildes beschreibt.

5. Verfahren nach einem der vorstehenden Ansprüche,
**dadurch gekennzeichnet,**
**dass** wenigstens ein Abbildungsparameter der den Systeminformationen zugeordneten Bilddaten eine Position innerhalb einer Statuszeile beschreibt.

6. Verfahren nach einem der vorstehenden Ansprüche,
**dadurch gekennzeichnet,**
**dass** die den Systeminformationen zugeordneten Bilddaten eine symbolische Form aufweisen.

7. Verfahren nach einem der vorstehenden Ansprüche,
**dadurch gekennzeichnet,**
**dass** die den Systeminformationen zugeordneten Bilddaten eine Textform aufweisen.

8. Verfahren nach einem der vorstehenden Ansprüche,
**dadurch gekennzeichnet,**
**dass** alle unterschiedlichen Bilddaten gleichzeitig abgebildet werden.
